# EUROPEAN PATENT SPECIFICATION

(11) **EP 0 705 209 B1**
(45) Date of publication and mention of the grant of the patent: **13.08.1997**
(21) Application number: 94918468.3
(22) Date of filing: 22.06.1994
(51) Int. Cl.: B65G 15/34, D03D 11/00

(54) **RUBBERLINE BELTING**
BAND MIT GUMMIEINLAGE
BANDE DE TRANSPORTEUR A GARNISSAGE EN CAOUTCHOUC

(30) Priority: 22.06.1993 GB 9312817; 18.08.1993 GB 9317150
(43) Date of publication of application: 10.04.1996
(73) Proprietor: J.H. FENNER & CO. LIMITED, Wellton Brough, North Humberside HU15 1PQ (GB)
(72) Inventor: ROBINSON, Jean Wood End, North Humberside HU12 8SP (GB); NORMANTON, Geoffrey, North Humberside HU10 6EU (GB); HOUSTON, Alec, North Humberside HU12 9HJ (GB)
(74) Representative: Walker, Antony James Alexander
(86) International application number: GB9401346
(87) International publication number: WO9500422

(56) References cited:
- AT-B- 262 878
- DE-A- 3 434 115
- DE-A- 3 833 527
- US-A- 4 157 752
- US-A- 4 407 333
- US-A- 4 877 126

## Description

This invention relates to textile reinforced conveyor beltings and more particularly to so called solid woven beltings wherein the reinforcing carcass comprises a single relatively thick integrally woven layer as distinct from plied construction beltings which are formed by laminating a plurality of relatively thin fabric layers coated with either poly (vinyl-chloride) (PVC) or rubber.

The manufacture of solid woven beltings presents a number of processing problems, particularly in achieving satisfactory impregnation of the thick textile carcass with PVC. Nevertheless, solid woven constructions are generally preferred because the textile substrate forms an integral matrix with the impregnation PVC and the cover layers of PVC thereby obviating the problem of delamination which is a frequent cause of premature failure in ply beltings. Solid woven constructions also display improved fastener holding and tear resistance.

Hitherto, solid woven constructions have been limited to the use of PVC as the impregnant. However, for certain applications, outer covers of rubber are advantageous, for example, on steep inclines. In order to provide a rubber load bearing surface, it is known to form an outer cover of polybudadiene acrylonitrile co-polymer (nitrile rubber) which is compatible with PVC and can be fused to the surface of a PVC impregnated solid woven carcass in a press. This process, whilst producing a satisfactory product, is relatively costly and in some instances is not economically viable.

Prior art document US-A-4 407 333 discloses a conveyor-belt core fabric comprising polyester yarns, whereby an adhesion-enhancing coating is foreseen prior to covering with rubber.

The object of the present invention is to provide a solid woven belting having an outer rubber cover and which avoids the costly necessity of first forming a PVC/textile substrate.

Previous attempts to produce an all rubber solid woven belting have not been successful owing to the difficulty of achieving satisfactory impregnation of a thick carcass with rubber solution. Furthermore, it has not proved technically feasible to employ chemical bonding systems as usually applied to the thin, tightly woven fabric layers used in the manufacture of ply beltings. When chemical bonding systems are used with solid woven carcasses the interstices of the woven fabric do not become filled with the impregnant polymer and this tends to impair the mechanical properties of the carcass.

The afore mentioned problems have now been overcome in a textile reinforced conveyor belting construction according to the present invention which provides a solid woven carcass impregnated and coated with rubber wherein the warp yarns comprise polyester filamentary yarn doubled with polyester yarns which have been texturised by a process known as air jet texturising (controlled bulking by air).

This combination of yarns has been found to provide an optimum balance of strength, contributed by the filamentary yarns and mechanical adhesion to the rubber by the texturised yarns.

The polyester filamentary yarns are comprised of extruded continuous filaments which are assembled in parallel with or without twist. The texturised polyester yarns are comprised of polyester filamentary yarns which have been further processed to impart an appearance and character similar to spun staple fibre yarns. In this regard the polyester filamentary yarn is fed through a nozzle in which it is subjected to a jet of high pressure air. As the yarn leaves the nozzles it is incident upon an impact block. This process has the effect of causing the single filaments comprising the yarn to form loops which partially interlock with each other under the influence of the turbulant air flow through the nozzle and over the impact block. A portion of these loops remain within the yarn thereby giving rise to an increase in bulk whilst some protrude from the outer surface giving a texturised appearance to the yarn.

When comparing a polyester filamentary yarn with a texturised polyester yarn the typical test results are as follows:-

| | Non-texturised | Texturised |
|---|---|---|
| Tenacity gms/denier | 8.3 | 4.2 |
| Elongation at breaking point | 10.94% | 12.02% |

Preferably the carcass is woven as a simple two or three ply construction where all the warp yarns follow a similar path. With this design, belt strengths of up to 1,250 KNs per metre of width can be achieved. To produce higher strength beltings, it is necessary to increase the number of warp yarns but the resultant more dense weave impedes the flow of impregnant into the centre of the belt.

An embodiment of the present invention will now be described, by way of example, with reference to the accompanying drawings, in which:-
Fig. 1 shows a diagrammatic view of a solid woven carcass of simple two-ply construction having warp yarns comprising polyester filamentary yarns and polyester texturised yarns doubled together in accordance with the first aspect of the present invention.
Fig. 2 shows a schematic diagram of apparatus for texturising polyester filamentary yarns.

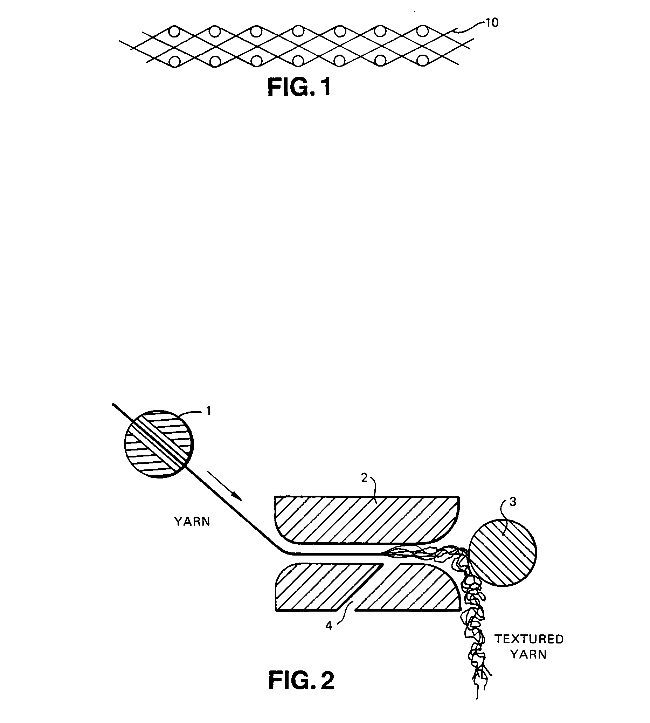

Referring to Fig. 1, there is shown a solid woven carcass of two ply construction for use in the manufacture of a conveyor belt or belting. The warp yarns 10 of the carcass are comprised of polyester filamentary yarns and texturised polyester yarns doubled together.

In use, in the manufacture of a belt or belting the solid woven carcass is dipped in rubber solution before being fed into a press where preformed uncured rubber sheeting is applied to each surface of the carcass and cured under heat and pressure. The rubber sheeting may be natural or synthetic.

The texturised polyester yarns ensure mechanical adhesion of the rubber sheeting to the carcass.

Fig. 2 shows a schematic diagram of apparatus for texturising polyester filamentary yarn. The apparatus comprises a wetting device 1, a texturising nozzle 2, and an impact block 3. As yarn to be texturised is fed through the wetting device 1 and into the nozzle 2 where it is subjected to a jet of compressed air through a port 4 in the side of the nozzle 2. As the yarn leaves the nozzle it is incident on the impact block 3. This process has the effect of causing the filaments in the yarn to separate, bunch up and form loops.

## Claims

1. A conveyor belt or belting comprising a solid woven carcass impregnated and coated with rubber, characterised in that the warp yarns comprise polyester filamentary yarns doubled with texturised polyester yarns.

2. A conveyor belt or belting according to claim 1, characterised in that the solid woven carcass is woven as a two or three ply construction in which all the warp yarns follow a similar path.

## Patentansprüche

1. Förderband oder Riemen umfassend eine mit Kautschuk imprägnierte oder beschichtete, feste gewebte Karkasse, dadurch gekennzeichnet, daß die Kettgarne mit strukturierten Polyestergarnen verzwirnte polyesterfaserige Garne aufweisen.

2. Förderband oder Riemen nach Anspruch 1, dadurch gekennzeichnet, daß die feste gewebte Karkasse als eine Doppel- oder Dreifachkonstruktion gewebt ist, bei der alle Kettgarne einem ähnlichen Weg folgen.

## Revendications

1. Bande ou courroie de transporteur comprenant une carcasse tissée solide imprégnée et recouverte de caoutchouc, caractérisée en ce que les fils de chaîne se composent de fils filamenteux de polyester doublés de fils de polyester texturés.

2. Bande ou courroie de transporteur conformément à la revendication 1, caractérisée en ce que la carcasse tissée solide est tissée sous forme de construction à deux ou trois plis dans laquelle tous les fils de chaîne suivent un trajet semblable.
